# EUROPEAN PATENT SPECIFICATION

(11) **EP 4 358 636 B1**
(45) Date of publication and mention of the grant of the patent: **04.03.2026**
(21) Application number: 22851739.7
(22) Date of filing: 20.06.2022
(51) Int. Cl.: H04W 76/00, H04W 76/27, H04W 76/34

(54) **LINK MAINTENANCE METHOD, APPARATUS, AND SYSTEM, TERMINAL, AND READABLE STORAGE MEDIUM**
VERFAHREN, VORRICHTUNG UND SYSTEM ZUR VERBINDUNGSWARTUNG, ENDGERÄT UND LESBARES SPEICHERMEDIUM
PROCÉDÉ, APPAREIL, ET SYSTÈME DE MAINTENANCE DE LIAISON, TERMINAL, ET SUPPORT DE STOCKAGE LISIBLE

(30) Priority: 03.08.2021 CN 202110886833
(43) Date of publication of application: 24.04.2024
(73) Proprietor: ZTE Corporation, Shenzhen, Guangdong 518057 (CN)
(72) Inventor: WANG, Mengqiang, Shenzhen, Guangdong 518057 (CN); GAO, Minggang, Shenzhen, Guangdong 518057 (CN); ZHAO, Lei, Shenzhen, Guangdong 518057 (CN)
(74) Representative: Savi, Massimiliano
(86) International application number: PCT/CN2022/099895
(87) International publication number: WO 2023/011023

(56) References cited:
- WO-A1-2014/205779
- WO-A1-2019/127327
- WO-A1-2020/165237
- CN-A- 104 081 869
- CN-A- 104 812 070
- CN-A- 109 246 856
- US-A1- 2015 236 985

## Description

### TECHNICAL FIELD

The present disclosure relates to the technical field of communication, in particular to a method, and a system for maintaining a link, a terminal device and a readable storage medium.

### BACKGROUND

Typically, a Radio Resource Control (RRC) connection will be released when a terminal device has no traffic, and a network side uses an inactivity timer to control how long the network will release the RRC connection after there is no traffic, and the timing duration is generally set to 10s. However, it takes time to re-establish RRC connection for services having high requirements for delay, such as industrial automation, vehicle to everything, and other services, which leads to a large delay in initiating services and is inefficient to meet the service having high requirements for delay.

Patent literature WO2019127327 A1 relates to a user equipment (UE) that may run a process associated with a low latency. As such, the UE may operate in a mode to stay in a connected state with a network.

### SUMMARY

Provided are a method, a device, and a system for maintaining a link, and a computer-readable storage medium in some embodiments of the present disclosure.

The invention is set out in the appended set of claims.

An embodiment of the present disclosure provides a method for maintaining a link, which is applied to a terminal device, the method includes, determining an end time at which a first service ends, after the first service is initiated to a network side; determining a time at which a Radio Resource Control (RRC) release message is received, in response to a reception of the RRC release message corresponding to the first service sent by the network side; estimating a timing duration of an inactivity timer set at the network side, according to the end time and the time at which the RRC release message is received; and sending, after the second service is initiated to the network side, a virtual data packet to the network side before a first timed duration reaches the timing duration, to maintain an RRC connection between the terminal device and the network side, where the first timed duration starts from the end time at which the second service ends.

An embodiment of the present disclosure provides a device for maintaining a link, the device includes, a first determining module, which is configured to determine an end time at which a first service ends, after the first service is initiated to a network side; a second determining module, which is configured to determine a time at which a Radio Resource Control (RRC) release message is received, in response to a reception of the RRC release message corresponding to the first service sent by the network side; an estimating module, which is configured to estimate a timing duration of an inactivity timer set at the network side, according to the end time and the time at which the RRC release message is received; and a sending module, which is configured to send, after the second service is initiated to the network side, a virtual data packet to the network side before a timed duration starting from the end time at which the second service ends, reaches the timing duration, to maintain an RRC connection between the terminal device and the network side.

An embodiment of the present disclosure provides a system for maintaining a link, the system includes a terminal device and a network side; where the terminal device is configured to determine a time at which a first service ends, in response to an initiation of the first service to a network side; the network side is configured to send an RRC release message corresponding to the first service to the terminal device; the terminal device is further configured to determine a time at which the RRC release message is received, and to estimate a timing duration of an inactivity timer set at the network side, according to the end time and the time at which the RRC release message is received; the terminal device is further configured to send, after the second service is initiated to the network side, a virtual data packet to the network side before a first timed duration reaches the timing duration, to maintain an RRC connection between the terminal device and the network side, where the first timed duration starts from the end time at which the second service ends.

An embodiment of present disclosure further provides a terminal device, which includes, at least one processor; and a memory in communication with the at least one processor; where the memory stores at least one instruction executable by the at least one processor, which when executed by the at least one processor, causes the processor to carry out the method as described above.

An embodiment of the present disclosure provides a computer-readable storage medium storing at least one computer program which, when executed by a processor, causes the processor to carry out the method as described above.

### BRIEF DESCRIPTION OF DRAWINGS

FIG. 1 depicts a flowchart showing a method for maintaining a link according to an embodiment of the present disclosure;
FIG. 2 depicts a schematic diagram showing an estimation of a timing duration according to an embodiment of the present disclosure;
FIG. 3 depicts a schematic diagram showing the units of a terminal device according to an embodiment of the present disclosure;
FIG. 4 depicts a flowchart showing another method for maintaining a link according to an embodiment of the present disclosure;
FIG. 5 depicts a schematic diagram showing a device for maintaining a link according to an embodiment of the present disclosure;
FIG. 6 depicts a schematic diagram showing a system for maintaining a link according to an embodiment of the present disclosure; and
FIG. 7 depicts a schematic diagram showing a terminal device according to an embodiment of the present disclosure.

### DETAILED DESCRIPTION

Various embodiments of the present disclosure will be described in detail below in conjunction with the drawings to illustrate the purpose, technical scheme, and advantages of the present disclosure. However, it shall be appreciated by those having ordinary skill in the art that many technical details are put forward in order to clarify the present disclosure. However, the technical solutions claimed in the present disclosure can be practiced even without these technical details and various alternations and modifications based on the following embodiments. The following embodiments are divided for the convenience of description, and should not constitute any limitation on the implementation of present disclosure. The embodiments can be combined with and based on each other without conflict.

An embodiment of the present disclosure provides a method for maintaining a link, which is applied to a terminal device. The terminal device can be a terminal device that is intended for bearing low delay, a terminal device that is insensitive to power consumption but has a high requirement for delay, such as, a Customer Premise Equipment (CPE), a vehicle to everything terminal device, and the like. Some details of the method set forth in this embodiment will be described below. The following description is only for understanding of the scheme, and which may not be a must for the practice of the scheme.

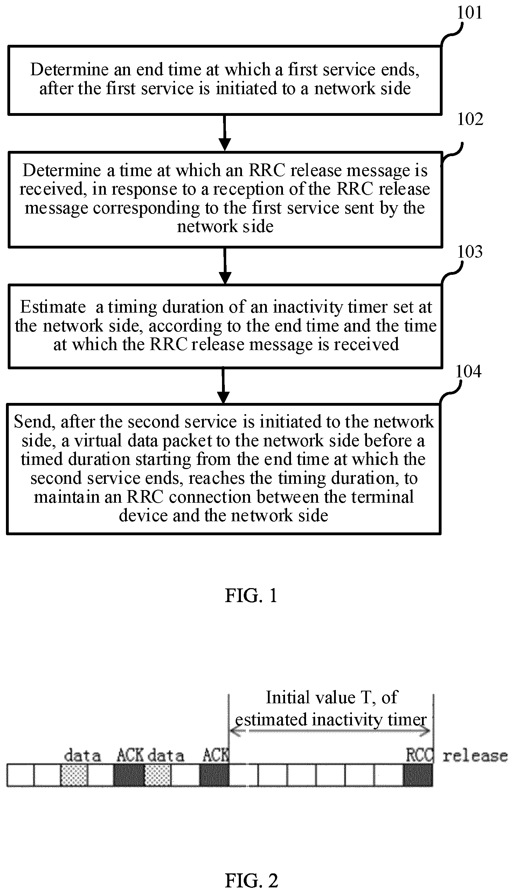

FIG. 1 depicts a flow chart showing a method for maintaining a link according to an embodiment. The method includes operations 101 to 104.

At operation 101, an end time of a first service is determined, after the first service is initiated to a network side.

At operation 102, a time at which an RRC release message is received is determined, in response to a reception of the RRC release message corresponding to the first service sent by the network side.

At operation 103, a timing duration of an inactivity timer set at the network side is estimated, according to the end time and the time at which the RRC release message is received.

At operation 104, after the second service is initiated to the network side, a virtual data packet is sent to the network side before a timed duration starting from the end time at which the second service ends, reaches the timing duration, to maintain an RRC connection between the terminal device and the network side.

After receiving the virtual data packet, the network side zeros the current timed duration of the inactivity timer, so as to maintain the RRC connection between the terminal device and the network side.

In this embodiment, the timing duration of the inactivity timer actually set at the network side is a parameter of the network side and will not be sent to the terminal device along with signaling. In view of this, there is provided a scheme for the terminal device to take the initiative to estimate the timing duration of the inactivity timer. That is, the timing duration of the inactivity timer can be reasonably estimated as a duration from the time at which the first service ends to the time at which the RRC release message is received. After the second service is initiated to the network side, a timer starts from the time at which the second service ends, and a virtual data packet is sent to the network side from the time at which the second service ends, and before the timer reaches a timing duration, to maintain the RRC connection between a terminal device and the network side. In this embodiment, it is not necessary to redesign the network side, and the terminal device can take the initiative to estimate the timing duration, and send a virtual data packet to the network side before the timed duration reaches the timing duration (before the inactive timer expires), so as to maintain the RRC connection between the terminal device and the network side. As such, the connection between the terminal device and the network side is maintained, thereby reducing the service delay, so as to meet the services that have high requirements for the delay, that is, mainly meet the requirements of low-delay services.

At operation 101, after initiating the first service to the network side, the terminal device determines the end time at which the first service ends. The network side can be a base station, and the first service can be a service initiated after the terminal device is turned on normally and successfully registered with the network, for example, the first service initiated after the terminal device is turned on normally and successfully registered in the network, and the terminal device can prepare for the maintenance of the RRC connection between the terminal device and the network side from the initiation of the first service after being turned on and registered, so that the terminal device and the network side can promptly enter the state where the RRC connection is maintained.

In an implementation, the determination by the terminal device, the end time at which the first service ends may include the operations in which, the terminal device determines the last Acknowledgment (ACK) corresponding to the first service; where the last ACK is the last ACK sent by the terminal device to the network side or the last ACK sent by the network side received by the terminal device; and then the terminal device determines the time at which the last ACK is sent or received as the end time at which the first service ends. It is convenient and accurate to determine whether the first service ends by the last received or sent ACK.

In an implementation, the terminal device can determine the last ACK corresponding to the first service in such a manner that, when receiving or sending an ACK for the first service, the terminal device updates the ACK as a reference ACK; when receiving or sending a subsequent ACK for the first service, the terminal device updates the subsequent ACK that is received or sent as a reference ACK, and takes the reference ACK as the time of the last ACK corresponding to the first service when the terminal device does not receive or send ACK for the first service.

In another implementation, the terminal device can determine the last ACK corresponding to the first service in such a manner that, the terminal device records the time at which each ACK is received and sent by the terminal device, and when the terminal device receives the RRC release message, the time of ACK closest to the time at which the terminal device receives the RRC release message, is taken as the time of the last ACK.

At operation 102, when receiving the RRC release message corresponding to the first service sent by the network side, the terminal device determines the time at which the RRC release message is received. The RRC release message corresponding to the first service can be understood as the RRC release message sent by the network side, when the timed duration exceeds the actually set timing duration, and after the first service ends. When the terminal device receives the RRC release message corresponding to the first service sent by the network side, it indicates that theoretically the duration from the end of the first service by the network side reaches the timing duration of the inactivity timer actually set at the network side, that is, a period of time passes after the first service ends, and the terminal device disconnects the connection with the network side when receiving the RRC release message.

At operation 103, the terminal device may take the end time as the start point of the timing duration to be estimated, and the time at which the RRC release message is received as the end point of the timing duration to be estimated, and estimate the timing duration of the inactivity timer set at the network side according to the start and end points. In an implementation, the time at which the last ACK is received or sent by the terminal device is taken as the start point, and the time at which the RRC release message issued by the network side is received, is taken as the end point, to calculate the value of T for the estimation of the timing duration, thus the timing duration of the inactivity timer set at the network side can be calculated. For example, it can be seen from FIG. 2 that the initial value T of the estimated inactivity timer, i.e., the estimated timing duration, is the duration from the time at which the last ACK ends to the time at which the RRC release message ends.

At operation 104, after the terminal device initiates the second service to the network side, the terminal device can start timing from the time at which the second service ends, and send a virtual data packet to the network side before the timed duration reaches a timing duration. The second service can be another service further initiated by the terminal device after the first service is initiated. The terminal device can start timing from the time at which the second service ends. The scheme through which the time when the second service ends is determined, is similar to that through which the time when the first service ends is determined, so which will not be described in this embodiment to be concise. The terminal device sends a virtual data packet to the network side before the timed duration reaches the timing duration, that is, before the timed duration does not exceed the estimated timing duration. As such, when receiving the virtual data packet, the network side zeros the current timed duration of the inactivity timer, so as to maintain the RRC connection between the terminal device and the network side until the terminal device is off, otherwise, the RRC connection between the terminal device and the network side can be maintained continuously. Hence, when the terminal device re-initiates the service, it is unnecessary to establish the RRC connection again, so as to reduce the service delay and meet the high requirements for delay by the service.

In an embodiment, operation 104 can be carried out in such a manner that, after the second service is initiated to the network side, a virtual data packet is sent to the network side before the timed duration starting from the end time at which the second service ends, reaches a collision avoidance duration corresponding to the timing duration; where the collision avoidance duration is less than the timing duration.

In an implementation, the collision avoidance duration can be set according to the practical demands. For example, the collision avoidance duration can be set as the difference (T-t) between the timing duration (denoted as T) and a preset time advance (denoted as t). The time advance can be set according to practical demands, which is not specifically limited in this embodiment. The terminal device sends a virtual data packet to the network side before the collision avoidance duration, T-t is reached, which duration is timed from the ending of the second service, which is beneficial to avoid the collision between the terminal device sending data and receiving the RRC release message.

In an implementation, the transmission of the virtual data packet to the network side before the timed duration exceeds the collision avoidance duration corresponding to the timing duration, includes the following operations in which, a virtual data packet is sent to the network side in response to a failure in receiving the RRC release message corresponding to the second service before the timed duration exceeds the collision avoidance duration corresponding to the timing duration. The RRC release message corresponding to the second service can be understood as the RRC release message sent by the network side, when the timed duration of the timer of the network side exceeds the actually set timing duration, and after the second service ends. For example, if the collision avoidance duration is T-t, the terminal device can determine whether the RRC release message is received before the timer with duration T-t is reached. In the case that the terminal device determines that the RRC release message is not received before the timer with duration T-t is reached, the terminal device sends a virtual data packet to the network side, which is beneficial to avoid collision with the RRC release message and ensure the transmission of the virtual data packet, and ensure that the virtual data packet can be accurately sent to the network side.

In an embodiment, the transmission of the virtual data packet to the network side before the timed duration reaches the collision avoidance duration corresponding to the timing duration, includes the following operations in which, before the timed duration reaches the collision avoidance duration corresponding to the timing duration, and in response to a reception of the RRC release message corresponding to the second service, the timing duration of the inactivity timer is updated to obtain the updated timing duration; where the updated timing duration is the duration between the end time at which the second service ends and the time at which the RRC release message corresponding to the second service is received; and after the third service is initiated to the network side, a virtual data packet is sent to the network side in response to a failure in receiving the RRC release message corresponding to the third service before the timed duration starting from the end time at which the third service ends, reaches the collision avoidance duration corresponding to the updated timing duration. The third service may be another service initiated by the terminal device after the second service ends. That is, if the terminal device receives the RRC release message corresponding to the second service before the timed duration reaches the collision avoidance duration corresponding to the timing duration, it indicates that the timing duration estimated by the terminal device is not so accurate. In this case, the terminal device updates the previously estimated timing duration to the duration between the end time at which the second service ends and the time at which the RRC release message corresponding to the second service is received. Hence, the update of the timing duration by the terminal device allows the acquisition of a more accurate timing duration of the inactivity timer actually set at the network side.

In an implementation, after the third service is initiated to the network side, if the RRC release message corresponding to the third service is received before the timed duration starting from the end time at which the third service ends, reaches the collision avoidance duration corresponding to the updated timing duration, it indicates that, the updated timing duration is still not so accurate. In this case, the terminal device can update the timing duration again, and the updated timing duration is the duration between the time at which the third service ends and the time at which the RRC release message corresponding to the third service is received. The RRC release message corresponding to the third service can be understood as the RRC release message sent by the network side, when the network side's timed duration of the timer starting from the time at which the third service ends, reaches the actually set timing duration. The estimated timing duration is repeatedly updated if the accuracy of the estimated timing duration is considered not accurate, until a failure in receiving the RRC release message corresponding to a service before the timed duration starting at the time when the service ends, reaches the collision avoidance duration corresponding to the updated timing duration, then the update of the estimated timing duration is terminated.

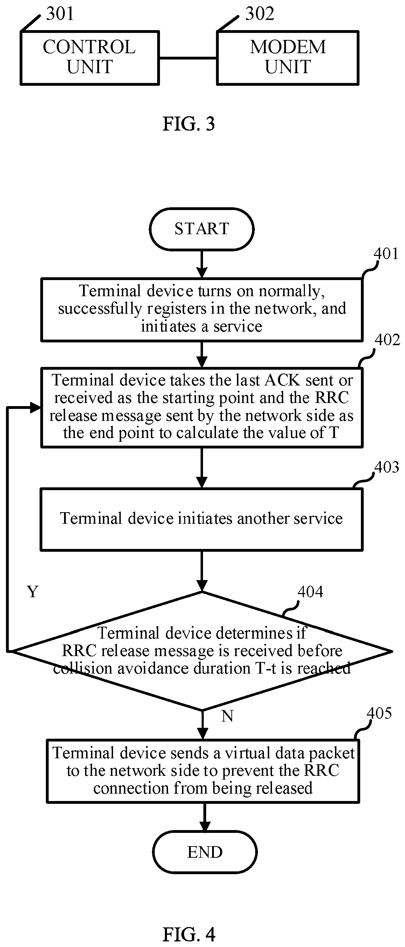

FIG. 3 depicts a terminal device according to an embodiment of the present disclosure. As shown in FIG. 3, the terminal device includes a control unit 301 and a MODEM unit 302. The MODEM unit 302 is configured to report relevant information for estimating the timing duration to the control unit 301, relevant information includes the time at which the last ACK is received or sent and the time at which the network side sends the RRC release message. The control unit 301 is configured to calculate and save the estimated timing duration T of the inactivity timer according to the relevant information reported by the MODEM unit 302, and is further configured to send a virtual data packet to the MODEM unit 302. The MODEM unit 302 sends the virtual data packet to the network side.

FIG. 4 depicts a flow chart showing a method for maintaining a link according to an embodiment. As shown in FIG. 4, the method includes operations 401 to 405.

At operation 401, the terminal device turns on normally, successfully registers in the network, and initiates a service.

The service initiated by the terminal device upon normal startup and successful network registration can be understood as the above-mentioned first service, and can also be understood as the first service initiated after the normal startup and successful network registration of the terminal device.

At operation 402, the terminal device takes the last ACK sent or received as the starting point and the time at which the RRC release message sent by the network side is received as the end point to calculate the value of T.

The value of T is the estimated timing duration of the inactivity timer set at the network side, which is estimated by the terminal device.

At operation 403, the terminal device initiates another service.

The another service initiated by the terminal device may be the above-mentioned second service, i.e., a service initiated after the first service ends.

At operation 404, the terminal device determines whether the RRC release message is received before the timed duration T-t is reached.

In particular, t denotes the preset time advance for avoiding collision between the data to be sent by the terminal device and the RRC release message, and T-t denotes the collision avoidance duration corresponding to the above-mentioned timing duration. The time advance can be set according to practical demands, which is not specifically limited in this embodiment. At operation 404, if the terminal device determines that the RRC release message was received before the timed duration T-t is reached, it indicates that the previously estimated value of T is inaccurate, and a re-estimation is necessary, for example, the method returns to operation 402 to recalculate and update the value of T. If the terminal device determines that the RRC release message is not received before the timed duration T-t is reached, it indicates that the previously estimated value of T is accurate, and then operation 405 is executed.

At operation 405, the terminal device sends a virtual data packet to the network side to prevent the RRC connection from being released.

In an implementation, the RRC connection between the terminal device and the network side is maintained until the terminal device is turned off.

In this embodiment, it is not necessary to redesign the network side. The terminal device can estimate the timing duration of the inactivity timer set on the network side, and update the timing duration according to the practical demands, so that the estimated timing duration can be close to and eventually equal to the actual timing duration of the inactivity timer set on the network side, which is beneficial to keeping the connection of the terminal device to reduce the service delay and mainly meet the requirements of low-delay services. Moreover, considering that if the data to be sent by the terminal device collides with the RRC release message to be received by the terminal device, the terminal device will not be able to determine whether to send the data or disconnect the RRC connection at that moment. In this embodiment, the collision avoidance duration T-t corresponding to the estimated timing duration T is set, which is beneficial to avoid the collision between the data to be sent by the terminal device and the RRC release message to be received by the terminal device.

It should be noted that the examples as illustrated above in the embodiments are illustrative for convenience of understanding, but are not limiting the present disclosure.

The processes of the above methods are divided only for clarity of description, and can be combined into one single process or some processes can be divided into several processes, any process in which an identical logical relationship to the present disclosure is included shall be within the scope of the present disclosure. The algorithm or process with any minor modifications or insignificant designs which do not change the core design of the algorithm and process, shall be within the scope of the present disclosure.

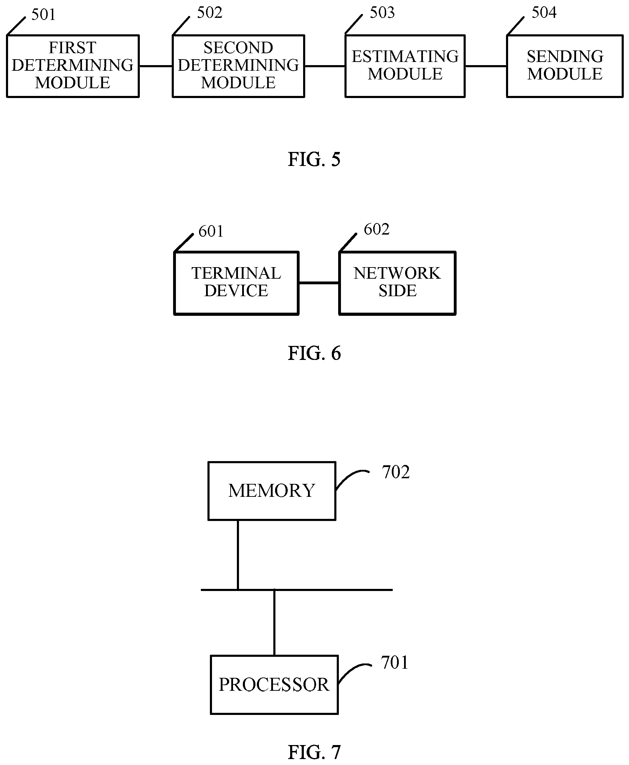

An embodiment of the present disclosure provides a device for maintaining a link. As shown in FIG. 5, the device includes, a first determining module 501, which is configured to determine an end time at which a first service ends, after the first service is initiated to a network side; a second determining module 502, which is configured to determine a time at which a Radio Resource Control (RRC) release message is received, in response to a reception of the RRC release message corresponding to the first service sent by the network side; an estimating module 503, which is configured to estimate a timing duration of an inactivity timer set at the network side, according to the end time and the time at which the RRC release message is received; and a sending module 504, which is configured to send, after the second service is initiated to the network side, a virtual data packet to the network side before a timed duration starting from the end time at which the second service ends, reaches the timing duration, to maintain an RRC connection between the terminal device and the network side.

It is clear that this embodiment is a device embodiment corresponding to the method embodiment as described above, and this embodiment may be implemented in cooperation with the method embodiment. The related technical details and technical effects described in the embodiment(s) above are still applicable to this embodiment, so which will not be repeated here in order to reduce redundancy. Accordingly, the relevant technical details as described in this embodiment can also be applied to the method embodiment(s) above.

An embodiment of the present disclosure provides a system for maintaining a link. As shown in FIG. 6, the system includes a terminal device 601 and a network side 602. The terminal device 601 is configured to determine an end time at which a first service ends, in response to an initiation of the first service to a network side 602. The network side 602 is configured to send an RRC release message corresponding to the first service to the terminal device 601. The terminal device 601 is further configured to determine a time at which the RRC release message is received, and to estimate a timing duration of an inactivity timer set at the network side, according to the end time and the time at which the RRC release message is received. The terminal device 601 is further configured to send, after the second service is initiated to the network side 602, a virtual data packet to the network side 602 before a timed duration starting from the end time at which the second service ends, reaches the timing duration. The network side 602 is further configured to zero, after receiving the virtual data packet, the current timed duration of the inactivity timer, to maintain an RRC connection between the terminal device 601 and the network side 602.

It is clear that this embodiment is a system embodiment corresponding to the method embodiment as described above, and this embodiment may be implemented in cooperation with the method embodiment. The related technical details and technical effects described in the embodiment(s) above are still applicable to this embodiment, so which will not be repeated here in order to reduce redundancy. Accordingly, the relevant technical details as described in this embodiment can also be applied to the method embodiment(s) above.

An embodiment of present disclosure provides a terminal device. As shown in FIG. 7, the terminal device includes at least one processor 701, and a memory 702 in communicative connection with the at least one processor 701, in which the memory 702 stores an instruction executable by the at least one processor 701, which when executed by the at least one processor 701, causes the at least one processor 701 to carry out the method for maintaining a link as described in any one of the embodiments above.

The memory 702 and the processor 701 are connected by a bus. The bus can include any number of interconnected buses and bridges, and the bus connects various circuits of one or more processors 701 and the memory 702 together. The bus can also connect various other circuits, such as peripheral devices, voltage regulators, power management circuits, etc., all of which are well-known in the art, so they will not be further described here. The bus interface provides an interface between the bus and the transceiver. The transceiver can be one element or a plurality of elements, such as a plurality of receivers and transmitters, providing a unit configured to communicate with various other devices over a transmission medium. The data processed by the processor 701 is transmitted over the wireless medium through the antenna. Furthermore, the antenna also receives the data and transmits it to the processor 701.

The processor 701 is configured for managing the bus and general processing, and can also provide various functions, including timing, peripheral interface, voltage regulation, power management and other control functions. And the memory 702 can be configured to store data for the processor 701 during operations.

An embodiment of the present disclosure provides a computer-readable storage medium storing a computer program. The computer program, when executed by a processor, causes the processor to carry out the method in any one of the embodiments as described above.

That is, it shall be appreciated by those having ordinary skill in the art that all or part of the processes for carrying out the above-mentioned method embodiments can be implemented by instructing related hardware through a program, which is stored in a storage medium and includes several instructions to cause a device (such as a single chip, a chip, etc.) or a processor perform all or part of the processes of the methods in various embodiments of the present disclosure. The aforementioned storage media include: U disk (flash disk), mobile hard disk, Read-Only Memory (ROM), Random Access Memory (RAM), magnetic disk or optical disk and other media that can store program codes.

In an embodiment of the present disclosure, an end time at which a first service ends is determined, after the first service is initiated to a network side; a time at which a Radio Resource Control (RRC) release message is received is determined, in response to a reception of the RRC release message corresponding to the first service sent by the network side; and a timing duration of an inactivity timer set at the network side, is estimated according to the end time and the time at which the RRC release message is received. In various embodiments of the present disclosure, the timing duration of the inactivity timer actually set at the network side is a parameter of the network side and will not be sent to the terminal device along with signaling. In view of this, there is provided a scheme for the terminal device to take the initiative to estimate the timing duration of the inactivity timer. That is, the timing duration of the inactivity timer can be reasonably estimated as a duration from the time at which the first service ends to the time at which the RRC release message is received. After the second service is initiated to the network side, a timer starts from a time at which the second service ends, and a virtual data packet is sent to the network side from the time at which the second service ends, and before the timer reaches a timing duration, to maintain the RRC connection between a terminal device and the network side. In the present disclosure, it is not necessary to redesign the network side, and the terminal device can take the initiative to estimate the timing duration, and send a virtual data packet to the network side before the timed duration reaches the timing duration. The network side, after receiving the virtual data packet, zeros the current timed duration of the inactivity timer, so as to maintain the RRC connection between the terminal device and the network side. As such, the connection between the terminal device and the network side is maintained, thereby reducing the service delay, so as to meet the services that have high requirements for the delay.

## Claims

1. A method for maintaining a link, which is applied to a terminal device, **characterized in that** the method comprises,
determining an end time at which a first service ends, after the first service is initiated to a network side (101);
determining a time at which a Radio Resource Control, RRC, release message is received, in response to a reception of the RRC release message corresponding to the first service sent by the network side (102);
estimating a timing duration of an inactivity timer set at the network side, according to the end time and the time at which the RRC release message is received (103); and
sending, after a second service is initiated to the network side, a virtual data packet to the network side before a first timed duration reaches the timing duration, to maintain an RRC connection between the terminal device and the network side, wherein the first timed duration starts from an end time at which the second service ends (104).

2. The method as claimed in claim 1, wherein, sending the virtual data packet to the network side before the first timed duration reaches the timing duration, comprises,
sending the virtual data packet to the network side before the first timed duration reaches a collision avoidance duration corresponding to the timing duration; wherein the collision avoidance duration is less than the timing duration;
wherein, the collision avoidance duration is a difference between the timing duration and a preset time advance.

3. The method as claimed in claim 2, wherein, sending the virtual data packet to the network side before the first timed duration reaches the collision avoidance duration corresponding to the timing duration, comprises,
sending the virtual data packet to the network side, in response to a failure in reception of the RRC release message corresponding to the second service before the first timed duration reaches the collision avoidance duration corresponding to the timing duration.

4. The method as claimed in claim 2, wherein, sending the virtual data packet to the network side before the first timed duration reaches the collision avoidance duration corresponding to the timing duration, comprises,
updating the timing duration of the inactivity timer, in response to a reception of the RRC release message corresponding to the second service before the first timed duration reaches the collision avoidance duration corresponding to the timing duration, to obtain an updated timing duration; wherein the updated timing duration is a temporal difference between the end time at which the second service ends and the time at which the RRC release message corresponding to the second service is received; and
after a third service is initiated to the network side, sending the virtual data packet to the network side in response to a failure in reception of the RRC release message corresponding to the third service before a second timed duration reaches the collision avoidance duration corresponding to the updated timing duration, wherein, the second timed duration starts from the end time at which the third service ends.

5. The method as claimed in claim 1, wherein determining the end time at which the first service ends, comprises,
determining a last acknowledgement, ACK, corresponding to the first service; wherein the last ACK is the last ACK sent by the terminal device to the network side or the last ACK received by the terminal device from the network side; and
determining the time at which the last ACK is sent or received as the end time at which the first service ends.

6. The method as claimed in any one of claims 1 to 5, wherein the first service is the first service initiated after the terminal device is turned on and successfully registered in network.

7. A system for maintaining a link, comprising a terminal device (601) and a network side (602); **characterized in that**,
the terminal device (601) is configured to determine a time at which a first service ends, in response to an initiation of the first service to the network side (602);
the network side (602) is configured to send a Radio Resource Control, RRC, release message corresponding to the first service to the terminal device (601);
the terminal device (601) is further configured to determine a time at which the RRC release message is received, and to estimate a timing duration of an inactivity timer set at the network side (602), according to the end time and the time at which the RRC release message is received; and
the terminal device (601) is further configured to send, after a second service is initiated to the network side (602), a virtual data packet to the network side (602) before a first timed duration reaches the timing duration, to maintain an RRC connection between the terminal device (601) and the network side (602), wherein the first timed duration starts from an end time at which the second service ends.

8. A terminal device, comprising at least one processor (701); and
a memory (702) in communication with the at least one processor (701); wherein,
the memory (702) stores an instruction executable by the at least one processor (701) which, when executed by the at least one processor (701), causes the at least one processor (701) to carry out the method as claimed in any one of claims 1 to 6.

9. A computer-readable storage medium storing at least one computer program, which when executed by a processor, causes the processor to carry out the method as claimed in any one of claims 1 to 6.

10. A computer program comprising instructions which, when the program is executed by a computer, cause the computer to carry out the method as claimed in any of claims 1 to 6.

## Patentansprüche

1. Verfahren zum Aufrechterhalten einer Verbindung, das auf eine Endgerätevorrichtung angewendet wird, **dadurch gekennzeichnet, dass** das Verfahren umfasst
Bestimmen eines Endzeitpunkts, an dem ein erster Dienst endet, nachdem der erste Dienst zu einer Netzwerkseite gestartet wurde (101);
Bestimmen eines Zeitpunkts, an dem eine RRC-Freigabemeldung (Radio Resource Control, Funkressourcensteuerung) empfangen wird, als Reaktion auf den Empfang der RRC-Freigabemeldung, die dem ersten Dienst entspricht und von der Netzwerkseite gesendet wurde (102);
Schätzen einer Zeitvorgabedauer eines auf der Netzwerkseite eingestellten Inaktivitätszeitgebers gemäß dem Endzeitpunkt und dem Zeitpunkt, an dem die RRC-Freigabemeldung empfangen wird (103); und
Senden eines virtuellen Datenpakets an die Netzwerkseite, nachdem ein zweiter Dienst zu der Netzwerkseite gestartet wurde, bevor eine erste Zeitdauer die Zeitvorgabedauer erreicht, um eine RRC-Verbindung zwischen der Endgerätevorrichtung und der Netzwerkseite aufrechtzuerhalten, wobei die erste Zeitdauer ab einem Endzeitpunkt beginnt, an dem der zweite Dienst endet (104).

2. Verfahren nach Anspruch 1, wobei das Senden des virtuellen Datenpakets an die Netzwerkseite, bevor die erste Zeitdauer die Zeitvorgabedauer erreicht, umfasst
Senden des virtuellen Datenpakets an die Netzwerkseite, bevor die erste Zeitdauer eine Kollisionsvermeidungsdauer erreicht, die der Zeitvorgabedauer entspricht; wobei die Kollisionsvermeidungsdauer kleiner ist als die Zeitvorgabedauer;
wobei die Kollisionsvermeidungsdauer eine Differenz zwischen der Zeitvorgabedauer und einem voreingestellten Zeitvorlauf ist.

3. Verfahren nach Anspruch 2, wobei das Senden des virtuellen Datenpakets an die Netzwerkseite, bevor die erste Zeitdauer die Kollisionsvermeidungsdauer erreicht, die der Zeitvorgabedauer entspricht, umfasst
Senden des virtuellen Datenpakets an die Netzwerkseite als Reaktion auf einen Fehler beim Empfang der RRC-Freigabemeldung, die dem zweiten Dienst entspricht, bevor die erste Zeitdauer die Kollisionsvermeidungsdauer erreicht, die der Zeitvorgabedauer entspricht.

4. Verfahren nach Anspruch 2, wobei das Senden des virtuellen Datenpakets an die Netzwerkseite, bevor die erste Zeitdauer die Kollisionsvermeidungsdauer erreicht, die der Zeitvorgabedauer entspricht, umfasst
Aktualisieren der Zeitvorgabedauer des Inaktivitätszeitgebers als Reaktion auf einen Empfang der RRC-Freigabemeldung, die dem zweiten Dienst entspricht, bevor die erste Zeitdauer die Kollisionsvermeidungsdauer erreicht, die der Zeitvorgabedauer entspricht, um eine aktualisierte Zeitvorgabedauer zu erhalten; wobei die aktualisierte Zeitvorgabedauer eine zeitliche Differenz zwischen dem Endzeitpunkt, an dem der zweite Dienst endet, und dem Zeitpunkt, an dem die RRC-Freigabemeldung, die dem zweiten Dienst entspricht, empfangen wird, ist; und
nachdem ein dritter Dienst zu der Netzwerkseite gestartet wurde, Senden des virtuellen Datenpakets an die Netzwerkseite als Reaktion auf einen Fehler beim Empfang der RRC-Freigabemeldung, die dem dritten Dienst entspricht, bevor eine zweite Zeitdauer die Kollisionsvermeidungsdauer erreicht, die der aktualisierten Zeitvorgabedauer entspricht, wobei die zweite Zeitdauer mit dem Endzeitpunkt beginnt, an dem der dritte Dienst endet.

5. Verfahren nach Anspruch 1, wobei das Bestimmen des Endzeitpunkts, an dem der erste Dienst endet, umfasst
Bestimmen einer letzten Bestätigung (ACK, acknowledgement), die dem ersten Dienst entspricht; wobei die letzte ACK die letzte ACK ist, die von der Endgerätevorrichtung an die Netzwerkseite gesendet wurde, oder die letzte ACK, die von der Endgerätevorrichtung von der Netzwerkseite empfangen wurde; und Bestimmen des Zeitpunkts, an dem die letzte ACK gesendet oder empfangen wird, als Endzeitpunkt, an dem der erste Dienst endet.

6. Verfahren nach einem der Ansprüche 1 bis 5, wobei der erste Dienst der erste Dienst ist, der nach dem Einschalten der Endgerätevorrichtung und der erfolgreichen Registrierung im Netzwerk gestartet wird.

7. System zum Aufrechterhalten einer Verbindung, umfassend eine Endgerätevorrichtung (601) und eine Netzwerkseite (602); **dadurch gekennzeichnet, dass**
die Endgerätevorrichtung (601) dazu konfiguriert ist, einen Zeitpunkt zu bestimmen, an dem ein erster Dienst endet, als Reaktion auf einen Start des ersten Dienstes zu der Netzwerkseite (602);
die Netzwerkseite (602) dazu konfiguriert ist, eine dem ersten Dienst entsprechende RRC-Freigabemeldung (Radio Resource Control, Funkressourcensteuerung) an die Endgerätevorrichtung (601) zu senden;
die Endgerätevorrichtung (601) ferner dazu konfiguriert ist, einen Zeitpunkt zu bestimmen, an dem die RRC-Freigabemeldung empfangen wird, und eine Zeitvorgabedauer eines auf der Netzwerkseite (602) eingestellten Inaktivitätszeitgebers entsprechend dem Endzeitpunkt und dem Zeitpunkt, an dem die RRC-Freigabemeldung empfangen wird, zu schätzen; und
die Endgerätevorrichtung (601) ferner dazu konfiguriert ist, ein virtuelles Datenpaket an die Netzwerkseite (602) zu senden, nachdem ein zweiter Dienst zu der Netzwerkseite (602) gestartet wurde, bevor eine erste Zeitdauer die Zeitvorgabedauer erreicht, um eine RRC-Verbindung zwischen der Endgerätevorrichtung (601) und der Netzwerkseite (602) aufrechtzuerhalten, wobei die erste Zeitdauer ab einem Endzeitpunkt beginnt, an dem der zweite Dienst endet.

8. Endgerätevorrichtung, umfassend mindestens einen Prozessor (701); und einen Speicher (702) in Verbindung mit dem mindestens einen Prozessor (701); wobei
der Speicher (702) eine von dem mindestens einen Prozessor (701) ausführbare Anweisung speichert, die, wenn sie von dem mindestens einen Prozessor (701) ausgeführt wird, den mindestens einen Prozessor (701) dazu veranlasst, das Verfahren nach einem der Ansprüche 1 bis 6 durchzuführen.

9. Computerlesbares Speichermedium, das mindestens ein Computerprogramm speichert, das, wenn es durch einen Prozessor ausgeführt wird, den Prozessor dazu veranlasst, das Verfahren nach einem der Ansprüche 1 bis 6 durchzuführen.

10. Computerprogramm, das Anweisungen umfasst, die, wenn das Programm von einem Computer ausgeführt wird, den Computer dazu veranlassen, das Verfahren nach einem der Ansprüche 1 bis 6 durchzuführen.

## Revendications

1. **Procédé** pour maintenir une liaison, qui est appliqué à un dispositif terminal, **caractérisé en ce que** le procédé comprend :
déterminer un temps de fin auquel un premier service se termine, après que le premier service a été initié du côté réseau (101) ;
déterminer un temps auquel un message de libération de commande de ressource radio (en Anglais « Radio Resource Control » pout RRC) est reçu, en réponse à une réception du message de libération RRC correspondant au premier service envoyé par le côté réseau (102) ;
estimer une durée de temporisation d'un temporisateur d'inactivité défini du côté réseau, en fonction du temps de fin et du temps auquel le message de libération RRC est reçu (103) ; et
envoyer, après qu'un deuxième service a été initié du côté réseau, un paquet de données virtuelles au côté réseau avant qu'une première durée temporisée n'atteigne la durée de temporisation, pour maintenir une connexion RRC entre le dispositif terminal et le côté réseau, dans lequel la première durée temporisée commence à partir d'un temps de fin auquel le deuxième service se termine (104).

2. Procédé selon la revendication 1, dans lequel l'envoi du paquet de données virtuelles au côté réseau avant que la première durée temporisée n'atteigne la durée de temporisation, comprend :
envoyer le paquet de données virtuelles au côté réseau avant que la première durée temporisée n'atteigne une durée d'évitement de collision correspondant à la durée de temporisation ; dans lequel la durée d'évitement de collision est inférieure à la durée de temporisation ;
dans lequel, la durée d'évitement de collision est une différence entre la durée de temporisation et une avance temporelle prédéfinie.

3. Procédé selon la revendication 2, dans lequel, l'envoi du paquet de données virtuelles au côté réseau avant que la première durée temporisée n'atteigne la durée d'évitement de collision correspondant à la durée de temporisation, comprend :
envoyer le paquet de données virtuelles au côté réseau, en réponse à une défaillance dans la réception du message de libération RRC correspondant au deuxième service avant que la première durée temporisée n'atteigne la durée d'évitement de collision correspondant à la durée de temporisation.

4. Procédé selon la revendication 2, dans lequel, l'envoi du paquet de données virtuelles au côté réseau avant que la première durée temporisée n'atteigne la durée d'évitement de collision correspondant à la durée de temporisation, comprend :
mettre à jour la durée de temporisation du temporisateur d'inactivité, en réponse à une réception du message de libération RRC correspondant au deuxième service avant que la première durée temporisée n'atteigne la durée d'évitement de collision correspondant à la durée de temporisation, pour obtenir une durée de temporisation mise à jour ; dans lequel la durée de temporisation mise à jour est une différence temporelle entre le temps de fin auquel le deuxième service se termine et le temps auquel le message de libération RRC correspondant au deuxième service est reçu ; et
après qu'un troisième service est initié du côté réseau, envoyer le paquet de données virtuelles au côté réseau en réponse à une défaillance dans la réception du message de libération RRC correspondant au troisième service avant qu'une deuxième durée temporisée n'atteigne la durée d'évitement de collision correspondant à la durée de temporisation mise à jour, dans lequel, la deuxième durée temporisée commence à partir du temps de fin auquel le troisième service se termine.

5. Procédé selon la revendication 1, dans lequel la détermination du temps de fin auquel le premier service se termine comprend :
déterminer un dernier accusé de réception (en Anglais « acknowledgement » pour ACK) correspondant au premier service ; dans lequel le dernier ACK est le dernier ACK envoyé par le dispositif terminal au côté réseau ou le dernier ACK reçu par le dispositif terminal du côté réseau ; et
déterminer le temps auquel le dernier ACK est envoyé ou reçu comme le temps de fin auquel le premier service se termine.

6. Procédé selon l'une quelconque des revendications 1 à 5, dans lequel le premier service est le premier service initié après que le dispositif terminal est allumé et enregistré avec succès dans le réseau.

7. Système pour maintenir une liaison, comprenant un dispositif terminal (601) et un côté réseau (602) ; **caractérisé en ce que**,
le dispositif terminal (601) est configuré pour déterminer un temps auquel un premier service se termine, en réponse à une initiation du premier service du côté réseau (602) ;
le côté réseau (602) est configuré pour envoyer un message de libération de commande de ressource radio, RRC, correspondant au premier service au dispositif terminal (601) ;
le dispositif terminal (601) est en outre configuré pour déterminer un temps auquel le message de libération RRC est reçu, et pour estimer une durée de temporisation d'un temporisateur d'inactivité défini du côté réseau (602), en fonction du temps de fin et du temps auquel le message de libération RRC est reçu ; et
le dispositif terminal (601) est en outre configuré pour envoyer, après qu'un deuxième service a été initié du côté réseau (602), un paquet de données virtuelles au côté réseau (602) avant qu'une première durée temporisée n'atteigne la durée de temporisation, pour maintenir une connexion RRC entre le dispositif terminal (601) et le côté réseau (602), dans lequel la première durée temporisée commence à partir d'un temps de fin auquel le deuxième service se termine.

8. Dispositif terminal, comprenant au moins un processeur (701) ; et
une mémoire (702) en communication avec l'au moins un processeur (701) ; dans lequel :
la mémoire (702) stocke une instruction exécutable par l'au moins un processeur (701) qui, lorsqu'elle est exécutée par l'au moins un processeur (701), amène l'au moins un processeur (701) à mettre en oeuvre le procédé selon l'une quelconque des revendications 1 à 6.

9. Support de stockage lisible par ordinateur stockant au moins un programme informatique, qui, lorsqu'il est exécuté par un processeur, amène le processeur à mettre en oeuvre le procédé selon l'une quelconque des revendications 1 à 6.

10. Programme informatique comprenant des instructions qui, lorsque le programme est exécuté par un ordinateur, amènent l'ordinateur à mettre en oeuvre le procédé selon l'une quelconque des revendications 1 à 6.
